# EUROPÄISCHE PATENTSCHRIFT

(11) **EP 1 893 905 B1**
(45) Veröffentlichungstag und Bekanntmachung des Hinweises auf die Patenterteilung: **14.10.2009**
(21) Anmeldenummer: 06755080.6
(22) Anmeldetag: 08.05.2006
(51) Int. Cl.: F16L 59/065, B29D 31/00, E04B 1/78

(54) **VERFAHREN ZUR HERSTELLUNG VON VAKUUMISOLATIONS-PANEELEN**
METHOD FOR THE PRODUCTION OF VACUUM INSULATION PANELS
PROCEDE DE FABRICATION DE PANNEAUX D'ISOLATION PAR LE VIDE

(30) Priorität: 09.05.2005 DE 102005021994
(43) Veröffentlichungstag der Anmeldung: 05.03.2008
(73) Patentinhaber: BASF SE, 67056 Ludwigshafen (DE)
(72) Erfinder: KLASSEN, Johann, 32351 Stemwede-Oppendorf (DE); KROGMANN, Jörg, 49393 Lohne (DE)
(86) Internationale Anmeldenummer: PCT/EP2006/062136
(87) Internationale Veröffentlichungsnummer: WO 2006/120183

(56) Entgegenhaltungen:
- EP-A- 0 862 032
- DE-A1- 19 726 732
- DE-A1- 19 917 787

## Beschreibung

Gegenstand der Erfindung sind Vakuum-Isolationspaneele, ein Verfahren zu ihrer Herstellung sowie offenzellige Polyurethan-Hartschaumstoffe, die für den Einsatz als Kernmaterial in Vakuumisolationspaneelen eingesetzt werden können.

Vakuumisolationseinheiten finden unter anderem Anwendung für Kühlgerätegehäuse, Behälter für Kühlfahrzeuge oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen bei etwa 20-30%.

Solche Vakuumisolationseinheiten bestehen in der Regel aus einem wärmeisolierenden Kernmaterial, beispielsweise offenzelligem Polyurethan (PUR)-Hartschaum, offenzelligem extrudiertem Polystyrolschaum, Kieselgelen, Glasfasern, Kunststoffschüttungen, gepresstem Mahlgut aus PUR-Hartschaum bzw. -Halbhartschaum oder Perlite., welches in eine gasdichte Folie verpackt, evakuiert und luftdicht eingeschweißt wird.

Bei einer weiteren Ausführungsform können Vakuumisolationseinheiten durch Einbringen eines Schaumsystems für offenzellige Polyurethan-Hartschaumstoffe in das Innere der Doppelwand eines doppelwandigen Gehäuses, beispielsweise eine Kühlmöbeltür oder ein Kühlmöbelgehäuse, wo das System zu einem offenzelligen Schaum aushärtet, und nachfolgende Evakuierung hergestellt werden. Bei dieser Ausführungsform kann eine Vakuumpumpe mit der Mit Schaum gefüllten Doppelwand verbunden werden, durch die das Vakuum bei Bedarf erneuert werden kann.

Bei der Verwendung von Polyurethan-Hartschaumstoffen ist es wesentlich, dass die Zellen des Schaums offen sind, um eine vollständige Evakuierung des Vakuum-Isolationspaneels zu erreichen.

EP 905159 sowie EP 905158 offenbaren Verfahren zur Herstellung von offenzelligen Hartschaumstoffen, wobei bevorzugt ein Veresterungsprodukt aus Fettsäuren und mehrfunktionellen Alkoholen als Emulgierhilfsmittel zur Unterstützung der lagerstabilen treibmittelhaltigen Emulsion eingesetzt wird. Dabei werden insbesondere Kombinationen von Perfluoralkanen und Alkanen als physikalische Treibmittel eingesetzt. Der Einsatz von Perfluoralkanen zur Erzeugung feiner Zellen ist bereits aus EP 351 614 bekannt.

Einen großen Einfluss auf die Wärmeleitfähigkeit der Vakuum-Isolationspaneele hat auch die Morphologie der Zellen der als Kernmaterial eingesetzten offenzelligen Polyurethan-Hartschaumstoffe.

Aus EP 967 243 ist bekannt, offenzellige Polyurethan-Hartschaumstoffe für den Einsatz als Kernmaterial für Vakuum-Isolationspaneele während des Schäumprozesses zu komprimieren. Dies erfolgt in zwei Stufen. Vor der Gelzeit des Schaums wird dieser auf ein Volumen von 40 bis 60 % des Volumens des frei geschäumten Schaums und in einer zweiten Stufe während der Steigzeit auf ein Volumen von 20 bis 30 % des Volumens des frei geschäumten Schaumskomprimiert.

Durch diese Kompression soll der Gehalt an offenen Zellen im Schaum erhöht werden. Die so erhaltenen Schäume können zu Vakuum-Isolationspaneelen mit einer reduzierten Wärmeleitfähigkeit eingesetzt werden. Nachteilig bei diesem Verfahren sind eine erhöhte Dichte des Schaums sowie ein schlechteres Entformverhalten durch die hohe Verdichtung während der Reaktionsphase. Aus WO 99/36636 ist ein Verfahren zur Herstellung von Vakuum-Isolationspaneelen bekannt, bei dem die Paneele während oder nach dem Evakuieren komprimiert werden. Dadurch soll eine Verringerung der Wärmeleitfähigkeit soweit eine faltenfreie Oberfläche der Elemente erreicht werden. Nachteilig ist hierbei, dass es durch die nachträgliche Kompression zu einer Beschädigung der Elemente, insbesondere der Schweißnaht, kommen kann. Dabei ist auch die Gefahr groß, dass durch die Kompression die Folie an den Oberflächen oder besonders an den Ecken beschädigt wird, beispielsweise durch kleine Mikrorisse, die die Lebensdauer der VIPs negativ beeinflussen können. Außerdem kommt es zu einem unerwünschten Druckanstieg im Paneel.

Aufgabe der vorliegenden Erfindung war es daher, Vakuum-Isolationspaneele unter Verwendung von offenzelligen Schaumstoffen als Kernmaterial zu entwickeln, die einfach herstellbar sind und eine geringe Wärmeleitfähigkeit aufweisen.

Gegenstand der Erfindung sind demzufolge Vakuum-Isolationspaneele, nach dem Wortlaut des Anspruches 7.

Gegenstand der Erfindung ist weiterhin ein Verfahren nach Anspruch 1.

Als Schaumstoffe können die zur Herstellung der Vakuum-Isolationspaneele üblicherweise eingesetzten offenzelligen Schaumstoffe verwendet werden. hierbei handelt es sich beispielsweise um Polystyrolschaum, Polyolefinschaum, wie Polyethylen- oder Polypropylenschaum, Polyacrylatschaum, Phenol-Formaldehydschaumstoffe, Polyvinylchlorid-Schaum, und insbesondere Polyurethan-Halbhart- oder Hartschaum, insbesondere Polyurethan-Hartschaum.

Die Verdichtung, berechnet als Paneeldicke vor dem Verpressen : Paneldicke nach dem Verpressen, liegt vorzugsweise im Bereich zwischen 2 und 3,8. Eine besonders niedrige Wärmeleitfähigkeit wird bei einer Verdichtung im Bereich zwischen 3 und 3,5 erreicht.

Im folgenden werden die Begriffe Komprimieren und Verpressen synonym verwendet.

Das Verpressen des Schaumstoffs erfolgt, wie beschrieben, vor der Evakuierung des Vakuum-Isolationspaneels. Insbesondere erfolgt das Verpressen nach der Formgebung des Kerns für das Vakuum-Isolationspaneel.

Das Verpressen kann vorzugsweise mittels einer hydraulischen oder pneumatischen Presse erfolgen. Dabei muss, insbesondere beim Verpressen nach dem Umhüllen des Schaumstoffs mit der Folie, gewährleistet sein, dass es zu keiner mechanischen Beschädigung kommt. Insbesondere müssen die Oberflächen der Pressvorrichtung sehr glatt sein und dürfen keine scharfkantigen oder spitzen Unebenheiten aufweisen. Vorzugsweise sollte die Oberfläche der Presse parallel zur Oberfläche des zu verpressenden Körpers sein.

Durch das Verpressen kann, je nach der aufgewandten Kraft, die Orientierung der Zellen sehr stark in Richtung einer Anisotrpoie bis hin zum Zellbruch verändert werden. Das Längen-Seiten-Verhältnis der Schaumzellen wird dabei in Richtung der Länge erhöht, bis bei weiterer Druckerhöhung schließlich ein Zellbruch auftritt.

Das Verpressen kann dabei in einer oder in mehreren Stufen vorgenommen werden. Bevorzugt erfolgt das Verpressen in einer Stufe.

Die mit dem Verpressen des Schaumstoffs einhergehende Verschlechterung der mechanischen Eigenschaften der Schaumstoffe kann toleriert werden, da Vakuum-Isolationspaneele im allgemeinen keiner starken mechanischen Beanspruchung unterliegen. Wichtiger für die Anwendung ist, dass sie bei der Anwendung dimensionsstabil sind. Dies ist bei den erfindungsgemäßen Vakuumisolationspaneelen gegeben. Ein weiterer des erfindungsgemäßen Verfahrens ist, dass das Eigenschaftsprofil des Hartschaums durch die Kompression in Richtung höhere Flexibilität verändert wird, so dass auch nicht planare VIPs einfach hergestellt werden können, beispielsweise für den Einsatz in der Rohrdämmung.

Häufig ist es so, dass die Wärmeleitfähigkeit nicht mit zunehmender Kompression sinkt. Oft durchläuft die Wärmeleitfähigkeit mit steigender Kompression ein Minimum, um danach wieder anzusteigen. Das für den jeweiligen Schaumtyp geltende Optimum kann vom Fachmann durch Vorversuche leicht ermittelt werden. Häufig hängt die Kompression auch von der geforderten Bauteilgröße ab. In jedem Falle ist die Wärmeleitfähigkeit von Schaumstoffen, die einem Verpressen unterworfen wurden, geringer als die von nicht verpressten Schaumstoffen.

Prinzipiell können alle beschriebenen offenzelligen Schaumstoffe, insbesondere offenzellige Polyurethan-Hartschaumstoffe, für die erfindungsgemäßen Vakuum-Isolationspaneele eingesetzt werden.

Die Herstellung der offenzelligen Polyurethan-Hartschaumstoffe erfolgt nach bekannten Verfahren durch Umsetzung von Polyisocyanaten mit Verbindungen mit mindestens zwei mit Isocyanatgruppen reaktiven Wasserstoffatomen.

Als Polyisocyanate werden vorzugsweise aromatische Polyisocyanate eingesetzt, besonders bevorzugt Isomere des Diphenylmethandiisocyanats (MDI) und Gemische aus Diphenylmethandiisocyanats und Polyphenylenpolymethylenpolyisocyanaten (Roh-MDI).

Als Verbindungen mit mindestens zwei mit Isocyanatgruppen reaktiven Wasserstoffatomen werden zumeist Polyetheralkohole und/oder Polyesteralkohole eingesetzt.

Die Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die Polyesteralkohole haben zumeist eine Funktionalität zwischen 2 und 8, insbesondere 4 bis 8.

Insbesondere als Polyhydroxylverbindungen verwendet werden Polyetherpolyole, die nach bekannten Verfahren, beispielsweise durch anionische Polymerisation von Alkylenoxiden in Gegenwart von Alkalihydroxiden, hergestellt werden.

Als Alkylenoxide werden vorzugsweise Ethylenoxid und 1,2-Propylenoxid eingesetzt. Die Alkylenoxide können einzeln, alternierend nacheinander oder als Mischungen verwendet werden.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl-und N-Ethyldiethanolamin und Trialkanolamine wie z.B. Triethanolamin und Ammoniak.

Weiterhin eingesetzt werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxy-diphenylpropan-2,2, Resole, wie z.B. oligomere Kondensationsprodukte aus Phenol und Formaldehyd und Mannich-Kondensate aus Phenolen, Formaldehyd und Dialkanolaminen sowie Melamin.

Die Polyetherpolyole besitzen eine Funktionalität von vorzugsweise 2 bis 8 und insbesondere 3 und 6 und Hydroxylzahlen von vorzugsweise 120 mgKOH/g bis 770 mgKOH/g und insbesondere 240 mgKOH/g bis 570 mgKOH/g.

Zu den Verbindungen mit mindestens zwei mit Isocyanatgruppen reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Verbindungen mit mindestens zwei mit Isocyanatgruppen reaktiven Wasserstoffatomen zum Einsatz.

Das erfindungsgemäße Verfahren wird üblicherweise in Anwesenheit von Treibmitteln, Katalysatoren sowie, falls erforderlich, Hilfs- und/oder Zusatzstoffen durchgeführt.

Als Katalysatoren können die üblichen und bekannten Polyurethan-Katalysatoren eingesetzt werden. Insbesondere werden Verbindungen eingesetzt, welche die Reaktion der Isocyanatgruppen mit den mit Isocyanatgruppen reaktiven Gruppen stark beschleunigen. Insbesondere eingesetzt werden organische Metallverbindungen, vorzugsweise organische Zinnverbindungen, wie Zinn(II)-salze von organischen Säuren.

Weiterhin können als Katalysatoren stark basische Amine eingesetzt werden. Beispiele hierfür sind sekundäre aliphatische Amine, Imidazole, Amidine, Triazine sowie Alkanolamine.

Die Katalysatoren können, je nach Erfordernis, allein oder in beliebigen Mischungen untereinander eingesetzt werden.

Als Treibmittel kann vorzugsweise Wasser verwendet werden, das mit Isocyanatgruppen unter Abspaltung von Kohlendioxid reagiert. An Stelle von, vorzugsweise jedoch in Kombination mit Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80°C. Zu den physikalischen Treibmitteln zählen auch inerte Gase, die in die Einsatzkomponenten eingebracht bzw. in ihnen gelöst werden, beispielsweise Kohlendioxid, Stickstoff oder Edelgase.

Die bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Hartschaumstoffe auf Isocyanatbasis werden die Polyisocyanate a) und die Verbindungen mit mindestens zwei mit Isocyanatgruppen reaktiven Wasserstoffatomen b) in solchen Mengen zur Umsetzung gebracht, dass das ÄquivalenzVerhältnis von NCO-Gruppen der Polyisocyanate a) zur Summe der reaktiven Wasserstoffatome der Komponenten b) 0,85 bis 1,75:1, vorzugsweise 1,0 bis 1,3:1 und insbesondere ungefähr 1,0 bis 1,15:1, beträgt. Sofern die Urethangruppen enthaltenden Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate a) zur Summe der reaktiven Wasserstoffatome der Komponente b) von 1,6 bis 60:1, vorzugsweise 3,0 bis 8:1 angewandt.

Die Hartschaumstoffe auf Isocyanatbasis können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, den Katalysatoren sowie den Hilfs- und/oder Zusatzstoffen zu einer sogenannten Polyolkomponente zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Die Vakuumisolationspaneele können in verschiedenen Formen hergestellt werden, beispielsweise als starre Paneele, oder auch mit anderen, nicht planaren Geometrien. Ihre Herstellung und die verwendbaren Materialien sind an sich bekannt. Es ist üblich, gemeinsam mit dem Kernmaterial auch ein Gettermaterial mit einzuschweißen, um zu verhindern, dass später ausgasende flüchtige Substanzen das Vakuum beeinträchtigen.

Als Hüllmaterial für die Vakuumisolationpaneele verwendet man im allgemeinen eine Folie. Bevorzugte Folien sind Verbundfolien, insbesondere Mehrschichtverbundfolien mit einer aufgedampften oder auflaminierten Metallschicht, beispielsweise aus Aluminium. Geeignete Folien bestehen z. B. aus Polyester, Polyvinylchlorid, Polyolefinen wie Polyethylen oder Polypropylen, oder Polyvinylalkohol. Als Hüllmaterial kommen beispielsweise auch Inliner von Kühlschränken, Rohrummantelungen oder Metallschichten in Betracht.

Bei der Herstellung von Vakuumisolationspaneelen unter Verwendung der nach dem erfindungsgemäßen Verfahren hergestellten Polyurethan-Hartschaumstoffe wird zunächst in an sich bekannter Weise der Schaum hergestellt. Danach werden die erhaltenen Schaumstoffe, sofern sie nicht bereits als entsprechende Formkörper hergestellt wurden, in die Form gebracht, die sie als Kern des Vakuum-Isolationspaneels haben. Dies geschieht vorzugsweise durch trennen, insbesondere sägen, in entsprechende Plattengröße. Beim Trennen wird insbesondere parallel zur Schäumrichtung getrennt, da auf Grund der Anisotropie der Schaumstoffe die entstehende Platte dann eine geringere Wärmeleitfähigkeit aufweist. Die Formkörper werden danach in die gasdichte Umhüllung, vorzugsweise die Verbund-Folie, verpackt, evakuiert und gasdicht verschweißt.

Die nach dem erfindungsgemäßen Verfahren hergestellten Vakuumisolationspaneele können zur Isolierung von Kühlgeräten, Containern und Gebäuden sowie zur Ummantelung von Rohren eingesetzt werden. Auf Grund ihrer Flexibilität können sie leicht verformt werden, was insbesondere beim Einsatz als Rohrummantelung von Vorteil ist.

Die Erfindung soll an den nachstehenden Beispielen näher beschrieben werden.

### Beispiele 1 bis 3 und Vergleichsbeispiel

Ein Block aus Polyurethan-Hartschaum mit der in der Tabelle angegebenen Dicke wird mit einer hydraulischen Presse auf die in der Tabelle angegebenen Dicken komprimiert und die Wärmeleitfähigkeit in Richtung der Kompression ermittelt. Die Ergebnisse finden sich ebenfalls in der Tabelle.

| | Beispiel 1 | Beispiel 2 | Beispiel 3 | Vergleichsbeispiel | Einheit |
|---|---|---|---|---|---|
| Schaum | I | I | II | I | |
| Dichte vor dem Verpressen | 40 | 40 | 60 | 40 | kg/m³ |
| Dicke ohne Verpressen | 30 | 36 | 30 | 30 | mm |
| WLF ohne Verpressen | 8,4 | 8,5 | 8,5 | 8,5 | mW/mK |
| 1. Verpressen Dicke WLF | 20 6,5 | 18 6,1 | 11 6,5 | | mm mW/mK |
| 2. Verpressen: Dicke WLF | 10 5,5 | | | | mm mW/mK |
| 3. Verpressen Dicke WLF | 6 6,1 | | | | mm mW/mK |

Bei Schaum I handelt es sich um einen Polyurethan-Hartschaumstoff, der auf einem Doppelband hergestellt wurde. Bei Schaum II handelt es sich um einen Polyurethan-Hartschaumstoff, der als Blockschaum hergestellt wurde.

## Patentansprüche

1. Verfahren zur Herstellung von Vakuum-Isolationspaneelen durch Umhüllen eines Formkörpers aus offenzelligem Schaumstoff mit einer gasdichten Folie und nachfolgender Evakuierung und gasdichten Verschweißen der Folie, **dadurch gekennzeichnet, dass** der Formkörper aus offenzelligem Schaumstoff nach der Aushärtung und vor der Evakuierung und nach dem Umhüllen des Schaumstoffs mit der Folie komprimiert wird.

2. Verfahren nach Anspruch 1, **dadurch gekennzeichnet, dass** der offenzellige Schaumstoff ein Polyurethan-Hartschaumstoff ist.

3. Verfahren nach Anspruch 1, **dadurch gekennzeichnet, dass** der offenzellige Schaumstoff in einer Stufe komprimiert wird.

4. Verfahren nach Anspruch 1, **dadurch gekennzeichnet, dass** der offenzellige Schaumstoff in mindestens zwei Stufen komprimiert wird.

5. Verfahren nach Anspruch 1, **dadurch gekennzeichnet, dass** die Verdichtung, berechnet als Paneeldicke vor dem Verpressen : Paneldicke nach dem Verpressen, im Bereich zwischen 2 und 3,8 liegt.

6. Verfahren nach Anspruch 1, **dadurch gekennzeichnet, dass** die Verdichtung, berechnet als Paneeldicke vor dem Verpressen : Paneldicke nach dem Verpressen, im Bereich zwischen 3 und 3,5 liegt.

7. Vakuum-Isolationspaneele, bestehend aus einem Formkörper aus offenzelligem Hartschaumstoff, welcher in eine gasdichte Folie verpackt, evakuiert und luftdicht eingeschweißt wird, **dadurch gekennzeichnet, dass** der offenzellige Polyurethan-Hartschaumstoff nach der Aushärtung und vor der Evakuierung und nach dem Umhüllen des Schaumstoffs mit der Folie komprimiert wird.

## Claims

1. A process for producing vacuum insulation panels by envelopment of a shaped body comprising open-celled foam with a gastight film and subsequent evacuation and gastight welding shut of the film, wherein the shaped body comprising open-celled foam is compressed after curing and before evacuation and after envelopment of the foam with the film.

2. The process according to claim 1, wherein the open-celled foam is a rigid polyurethane foam.

3. The process according to claim 1, wherein the open-celled foam is compressed in one stage.

4. The process according to claim 1, wherein the open-celled foam is compressed in at least two stages.

5. The process according to claim 1, wherein the compaction calculated as panel thickness before pressing : panel thickness after pressing is in the range from 2 to 3.8.

6. The process according to claim 1, wherein the compaction calculated as panel thickness before pressing : panel thickness after pressing is in the range from 3 to 3.5.

7. A vacuum insulation panel comprising a shaped body comprising open-celled rigid foam which is packed in a gastight film, evacuated and welded in so as to be airtight, wherein the open-celled rigid polyurethane foam is compressed after curing and before evacuation and after envelopment of the foam with the film.

## Revendications

1. Procédé pour la fabrication de panneaux d'isolation sous vide par enrobage d'un corps moulé à base de matière alvéolaire à cellules ouvertes avec un film étanche aux gaz et mise sous vide subséquente et soudage étanche aux gaz du film, **caractérisée en ce que** le corps moulé à base de matière alvéolaire à cellules ouvertes est comprimé après le durcissement et avant la mise sous vide et après l'enrobage de la matière alvéolaire avec le film.

2. Procédé selon la revendication 1, **caractérisé en ce que** la matière alvéolaire à cellules ouvertes est une mousse rigide de polyuréthanne.

3. Procédé selon la revendication 1, **caractérisé en ce que** la matière alvéolaire à cellules ouvertes est comprimée en une étape.

4. Procédé selon la revendication 1, **caractérisé en ce que** la matière alvéolaire à cellules ouvertes est comprimée en au moins deux étapes.

5. Procédé selon la revendication 1, **caractérisé en ce que** le compactage, exprimé en tant qu'épaisseur du panneau avant la compression : épaisseur du panneau après la compression, se situe dans la plage comprise entre 2 et 3,8.

6. Procédé selon la revendication 1, **caractérisé en ce que** le compactage, exprimé en tant qu'épaisseur du panneau avant la compression : épaisseur du panneau après la compression, se situe dans la plage comprise entre 3 et 3,5.

7. Panneaux d'isolation sous vide, constitués d'un corps moulé à base de matière alvéolaire à cellules ouvertes qui est enveloppé dans un film étanche aux gaz, mis sous vide et soudé de façon étanche à l'air, **caractérisés en ce que** la mousse rigide de polyuréthanne à cellules ouvertes est comprimée après le durcissement et avant la mise sous vide et après l'enrobage de la mousse avec le film.
